Europäisches Patentamt

European Patent Office

Office européen des brevets

(11) Publication number: **0 270 281**
**A2**

(12) **EUROPEAN PATENT APPLICATION**

(21) Application number: **87310220.6**

(51) Int. Cl.⁴: **A23C 11/02**

(22) Date of filing: **19.11.87**

(30) Priority: **04.12.86 GB 8629050**

(43) Date of publication of application:
**08.06.88 Bulletin 88/23**

(84) Designated Contracting States:
**BE DE FR GB NL**

(71) Applicant: **IMPERIAL CHEMICAL INDUSTRIES PLC**
**Imperial Chemical House Millbank**
**London SW1P 3JF(GB)**

(72) Inventor: **Ratter, Henry**
**12 Pine Gardens**
**Upton-by-Chester Chester(GB)**

(74) Representative: **Walmsley, David Arthur Gregson et al**
**Imperial Chemical Industries PLC Legal department: Patents PO Box 6 Bessemer Road**
**Welwyn Garden City Hertfordshire AL7 1HD(GB)**

(54) **Non dairy product.**

(57) A non-dairy product, e.g. a creamer for use in a coffee brew, which product contains at least 0.2%, and preferably more than 1%, of at least one water-soluble carbonate based on the dry weight of the solids in the non-dairy product. The carbonate may be, for example, sodium carbonate, bicarbonate or sesquicarbonate. Use of the carbonate imparts feathering resistance to the product, and feathering resistance does not depend on the use of a phosphate in the product.

## NON-DAIRY PRODUCT

This invention relates to a non-dairy product.

The expression "non-dairy" product is an expression which is well-known in the art and which is widely used to mean a milk product which has not been derived directly from the dairy but which has been modified in some way. Thus, the "non-dairy" product may be a milk product which has been modified in respect of its fat content or in respect of its casein content. The present invention relates to a non-dairy product, and in particular to such a product which is intended for use as a creamer, particularly for use as a creamer in coffee.

When a non-dairy creamer is added to a coffee brew, which may be a brew prepared from roast and ground coffee or from soluble coffee, the creamer may be subject to the phenomenon known as feathering whereby a component of the creamer is precipitated from solution in the coffee brew in the presence of an unfavourable acid and/or salt environment. Such feathering, which is akin to milk curdling and which gives a most undesirable appearance to the coffee, may occur when the coffee brew is acidic and/or when the coffee brew is made with hard water containing a high proportion of calcium and/or magnesium ions. A particularly undesirable feature of feathering is the undesirable appearance which feathering imparts to the coffee brew.

In order to impart feathering resistance to a non-dairy product it is known to include certain inorganic salts in such a non-dairy product. For example, it has been proposed to include in such a non-dairy product dipotassium hydrogen phosphate, sodium aluminium phosphate, and polyphosphates.

However, the use of such phosphates in a non-dairy product may have certain disadvantages. Thus, it is believed that the use of such phosphates may be undesirable from a health aspect, and the use of phosphates may lead to an undesirable taste when the non-dairy product is used, e.g. when used in a coffee brew.

The present invention relates to a non-dairy product containing an additive which imparts feathering resistance to the product when the product is used without the need to include a phosphate in the product, which in use generally does not lead to an undesirable taste, and which in respect of this latter property is at least comparable with a non-dairy product containing phosphate. The additive is also relatively inexpensive.

According to the present invention there is provided a non-dairy product which contains at least 0.2% by weight of at least one water-soluble carbonate, as herein defined, based on the dry weight of the solids in the non-dairy product.

The non-dairy product will generally contain at least 0.5% by weight of at least one carbonate, and in particular it is preferred that it contains more than 1% by weight of at least one carbonate, in order that substantial feathering resistance may be imparted, but in general it will be unnecessary to incorporate more than 10% by weight of at least one carbonate into the non-dairy product. It is preferred that the non-dairy product contains not more than 5% by weight of at least one carbonate.

By carbonate we mean a carbonate per se, or a bicarbonate, or a compound thereof, e.g. a sesquicarbonate. The non-dairy product contains at least one carbonate. Thus, it may contain for example one or more carbonates per se, or one or more bicarbonates, or one or more sesquicarbonates, or a mixture of any combination thereof. The carbonate must be water-soluble and for this reason, and because of availability, it is preferred that the carbonate is an alkali metal carbonate. Examples of alkali metal carbonates include sodium carbonate, sodium bicarbonate and sodium sesquicarbonate, potassium carbonate, potassium bicarbonate and potassium sesquicarbonate.

Known non-dairy products may contain a phosphate, e.g. dipotassium hydrogen phosphate, sodium aluminium phosphate or a polyphosphate. It is unnecessary for the non-dairy product of the present invention to contain a phosphate, and, if it does contain a phosphate the phosphate should be present in an amount of no more than 200% by weight of the carbonate in the non-dairy product. It is preferred that the non-dairy product, if it contains phosphate, does not contain more than 50% of phosphate by weight of the carbonate. The most preferred non-dairy product of the invention contains little or no phosphate.

The non-dairy product may be in a liquid form, e.g. in the form of an aqueous emulsion, or it may be in a solid form, e.g. in the form of a substantially dry particulate solid, and the invention is not limited to any particular composition of non-dairy product. For example, a non-dairy product usually contains fat, protein and carbohydrate, but it may contain other components. The protein may be, for example, skim milk solids or sodium caseinate, and the carbohydrate may be, for example, corn syrup solids or glucose solids. The non-dairy product may contain, for example, from 10 to 50% by weight of fat, from 2 to 20% by weight of protein, and from 25% to 70% by weight of carbohydrate, all percentages being based on the dry weight of the solids in the non-dairy product. More usually the non-dairy product will contain from 20 to 40% by weight of fat, from 2 to 15% by weight of protein, and from 30 to 65% by weight of carbohydrate.

The non-dairy product of the invention may be produced by mixing the components of the product with water and emulsifying the components in water. Thus, fat, protein and carbohydrate may be mixed with water and with at least one carbonate and the components may be emulsified in the water, optionally in the presence of an emulsifying agent. The non-dairy product may be in a liquid form or it may be in a solid form. Where the non-dairy product is in solid form it may be produced by drying the liquid emulsion herein described, and it is particularly suitable to spray-dry the liquid emulsion as the thus dried non-dairy product will then be in a particulate form which is readily soluble when used, for example when used as a non-dairy creamer in a coffee brew. The carbonate may be added to the non-dairy product after drying of the emulsion, that is to the solid non-dairy product, but in order that the carbonate shall be well dispersed in the solid non-dairy product it is preferred that the carbonate is present in the emulsion prior to drying of the emulsion.

The invention is now described with reference to the following examples in which all percentages are percentages by weight.

## Examples 1 to 3

In three separate examples a solid non-dairy product for use as a coffee whitener was produced from the following components.

| Component | Example 1 % | Example 2 % | Example 3 % |
|---|---|---|---|
| Glucose solids | 58.0 | 58.0 | 58.0 |
| Hardened palm Kernel oil | 35.0 | 35.0 | 35.0 |
| Sodium caseinate | 5.0 | 5.0 | 5.0 |
| Glycerol monostearate | 1.0 | 1.0 | 1.0 |
| Sodium carbonate | 1.0 | – | – |
| Sodium bicarbonate | – | 1.0 | – |
| Sodium sesquicarbonate | – | – | 1.0 |

In each of the examples the glucose solids, sodium caseinate and sodium carbonate (or sodium bicarbonate or sodium sesquicarbonate) were mixed with water to form a solution, glycerol monostearate was mixed with a separate portion of water at a temperature of 60°C to form a solution, and the two solutions were mixed.

Hardened palm kernel oil was melted in a steam-jacketed pan and heated to a temperature of 60°C, and the melted oil was blended with the mixed solutions described above in a Silvesson high-speed mixer. The resultant emulsion was passed through an APV two-stage homogeniser at 2500 lb/sq in and 500 lb/sq in and the resultant homogenised emulsion was charged to an Anhydro spray drier by a peristaltic pump. The emulsion was spray-dried to a powder under the following conditions, feed rate 1.5 l/hour, inlet temperature 105°C, outlet temperature 74°C, atomiser speed 28.00 rev/minute.

The resultant powder was agglomerated by charging the powder to a Magimix food processor and spraying water into the processor until the powder was sufficiently agglomerated. The agglomerated product was spread onto a tray and dried in an oven at 50°C for 3 hours after which time the product was charged to a glass container and sealed in the container ready for use.

Each of the non-dairy products produced as described above was tested as a coffee whitener. Three coffee brews were prepared by adding 8 g of an instant coffee to 1 litre of boiling water and 13.3 g of non-dairy product was added to each brew to produce three coffee brews containing the non-dairy products of, respectively, Examples 1, 2 and 3.

The three coffee brews were assessed for acceptability and mouth feel by a panel of twelve tasters. For comparison a fourth coffee brew produced as described above was also assessed, this latter coffee brew containing 13.3 g of a commercial coffee whitener which contained a phosphate. None of the coffee brews indicated feathering.

The results of the tasting by the panel showed that each of the coffeee brews was generally acceptable and had an acceptable mouth feel and that there was no statistically significant difference in mouth feel and in general acceptability between the non-dairy products of Examples 1, 2 and 3 and the commercial coffee whitener.

Examples 4, 5 and 6

In three separate examples a liquid non-dairy product for use as a coffee whitener was produced from the following components.

| Component | Example 4 % | Example 5 % | Example 6 % |
|---|---|---|---|
| Water | 67.8 | 67.8 | 67.8 |
| Glucose solids | 8.3 | 8.3 | 8.3 |
| Hardened palm Kernel oil | 18.4 | 18.4 | 18.4 |
| Sodium Caseinate | 4.2 | 4.2 | 4.2 |

| Component | Example 4 % | Example 5 % | Example 6 % |
|---|---|---|---|
| Glycerol monostearate | 0.7 | 0.7 | 0.7 |
| Admul SSL 2012 | 0.4 | 0.4 | 0.4 |
| Sodium carbonate | 0.2 | – | – |
| Sodium bicarbonate | – | 0.2 | – |
| Sodium sesquicarbonate | – | – | 0.2 |

In each of the examples glycerol monostearate was dissolved in a portion of the water at a temperature of 60°C to form a first solution, a second solution was formed by mixing the remainder of the water with the remaining components except the hydrated palm kernel oil, and the first and second solutions were mixed in a Silvesson mixer, and finally molten palm kernel oil was added to the mixed solutions at a temperature of 50°C. The resultant liquids were homogenised in the Silvesson mixer, passed through an APV two-stage homogeniser at 2500 lb/sq in, and 500 lb/sq in, charged to separate glass containers, pasteurised by heating at 80°C for 10 minutes, sealed in the containers, and chilled until ready for use.

Each of the non-dairy products produced as described above was tested as a coffee whitener in a coffee brew following the procedure described with reference to Examples 1 to 3 except that 8 g of instant coffee and 87 ml of non-dairy product were used in each test. As a comparison a fourth coffee brew was made except that the non-dairy product which was used was a commercial liquid coffee whitener which contained a phosphate. None of the coffee brews indicated feathering.

The results of the tasting by the panel showed that each of the coffee brews was generally acceptable and had an acceptable mouth feel and that there was no statistically significant difference in mouth feel and in general acceptability between the non-dairy products of Examples 4, 5 and 6 and the commercial liquid coffee whitener.

**Claims**

1. A non-dairy product which contains at least 0.2% by weight of at least one water-soluble carbonate based on the dry weight of the solids in the non-dairy product.

2. A non-dairy product as claimed in claim 1 which contains more than 1% by weight of at least one water-soluble carbonate.

3. A non-dairy product as claimed in claim 1 or claim 2 which contains not more than 10% by weight of at least one carbonate.

4. A non-dairy product as claimed in any one of claims 1 to 3 in which the carbonate is an alkali metal carbonate.

5. A non-dairy product as claimed in any one of claims 1 to 4 in which the carbonate is a carbonate per se, a bicarbonate or a sesquicarbonate.

6. A non-dairy product as claimed in any one of claims 1 to 5 which, if it contains phosphate, contains not more than 50% of phosphate by weight of carbonate.

7. A non-dairy product as claimed in any one of claims 1 to 6 which is in the form of an aqueous emulsion.

8. A non-dairy product as claimed in any one of claims 1 to 6 which is in the form of a substantially dry particulate solid.

9. A non-dairy product as claimed in any one of claims 1 to 8 which contains 10 to 50% by weight of fat, 2 to 20% by weight of protein, and from 25% to 70% by weight of carbohydrate based on the dry weight of the solids in the non-dairy product.